(19) Europäisches Patentamt
European Patent Office
Office européen des brevets

(11) **EP 1 939 797 A1**

(12) **EUROPEAN PATENT APPLICATION**

(43) Date of publication:
**02.07.2008 Bulletin 2008/27**

(51) Int Cl.:
***G06N 5/02*** (2006.01)    ***G06N 1/00*** (2006.01)

(21) Application number: **06127188.8**

(22) Date of filing: **23.12.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK RS**

(71) Applicant: **NTT DoCoMo, Inc.**
**Tokyo (JP)**

(72) Inventors:
• **Wagner, Matthias**
  **80999 München (DE)**
• **Luther, Marko**
  **82256 Fürstenfeldbruck (DE)**
• **Boehm, Sebastian**
  **81671 München (DE)**
• **Koolwaaij, Johan**
  **7534 HK, Enschede (NL)**

(74) Representative: **Betten & Resch**
**Patentanwälte**
**Theatinerstrasse 8**
**80333 München (DE)**

(54)    **Method and apparatus for automatically determining a semantic classification of context data**

(57)    A method for automatically determining a semantic classification for context data obtained by a mobile device, said method comprising:

sampling by said mobile device one or more context data streams over time;

applying a clustering algorithm to identify one or more clusters in the sampled context data;

running a logic engine to automatically determine a concept name from a set of predefined concept names as a semantic classification of said one or more clusters;

assigning said concept name to said one or more clusters or suggesting said assignment to the user.

500 Context data sampling over time period

510 Apply clustering algorithm to find clusters

520 Determine a concept name

530 Assign or suggest concept name

**Fig. 2**

EP 1 939 797 A1

Description

FIELD OF INVENTION

The present invention relates to a method and an apparatus for method for automatically determining a semantic classification to context data.

BACKGROUND OF THE INVENTION

In context-aware mobile applications, many different types of context information can be gathered from sensors. Most of these sensors deliver quantitative data such as integer and floating-point values representing temperatures, speed, or heart rate. With the increased quality of the technology the challenge has shifted from gathering and sharing this raw context data to its proper interpretation. Machine learning techniques have been applied to detect patterns, similarities and trends in the data, but the question of how to interpret this inferred data is still an open issue.

So far existing solutions only tag raw context data with a keyword for later reference. As an example one can mention Google Earth (see e.g. http://earth.google.com) and Flickr (see e.g. http://www.flickr.com) as applications that allow for tagging specific locations on the globe or specific pictures with a tag to enable search, retrieval and categorization. However, the problem with tags of specific geo-locations is that a place, in the sense of a precise location, can only be detected if geo-information is available from a GPS or a known beacon. For locations, specified by unknown beacons, other options need to be investigated.

On the other hand, generic clustering techniques and similarity detection have also been applied to context data streams (see e.g. Flanagan, J A., Unsupervised clustering of context data and learning user requirements for a mobile device, in Proceedings of the 5th Conference on Modeling and Using Context (CONTEXT-05), pages 155-168, 2005), but the focus is more on the detection of clusters rather than on the identification and the actual meaning of clusters. An unidentified context cluster can still be used to relate e.g. user behavior to that cluster, so that future recommendations can be based on historic user behavior. The most common example here is the prioritizing and ordering of applications in the menu or the favorites in a browser based on historic use in the current context cluster.

However, there is no known technology for clustering and automatically naming context data in mobile devices which supports intuitive naming approaches similar to "real-world" tagging of data as done by a user.

SUMMARY OF THE INVENTION

According to one embodiment there is provided a method for automatically determining a semantic classification to context data obtained by a mobile device, said method comprising:

    sampling by said mobile device one or more context data streams over time;
    applying a clustering algorithm to identify one or more clusters in the sampled context data;
    running a logic engine to automatically determine a concept name from a set of predefined concept names as a semantic classification of said one or more clusters;
    assigning said concept name to said one or more clusters or suggesting said assignment to the user.

According to one embodiment said mobile device samples a plurality of context data streams, whereas the sampling data are used to populate context state vectors such that a vector component of a context state vector corresponds to one of said plurality of data streams, whereas said sampling is carried out in regular time intervals, each sampling resulting in a corresponding context state vector populated by the sampled values, and said method further comprising:

    executing said clustering algorithm on a set of sampled context state vectors to obtain a cluster which is spanned up by context state vectors.

According to one embodiment the clustering algorithm comprises a Markov clustering algorithm.
According to one embodiment
a cluster found by the clustering algorithm is named or suggested for naming to the user if the total stay of the user inside this cluster exceeds a certain threshold.
According to one embodiment the method further comprises:

    providing an ontology which comprises a set of possible concept names and which are qualitative terms which may be used for naming said cluster, whereas

receiving by said logic the parameters defining a cluster obtained from said clustering algorithm, whereas said logic engine has implemented knowledge about under which conditions a cluster should be assigned which concept name; processing said parameters defining a cluster by said logic engine and returning a suggestion for a concept name for said cluster by said logic engine.

According to one embodiment said processing comprises:

referring to a set of rules to decide based on the parameters defining said clusters which rules are fulfilled and which conclusion therefore has to be drawn to arrive at a concept name as said conclusion.

According to one embodiment said processing comprises:

if said cluster has other clusters in its proximity which according to a distance measure lie within a certain threshold, and if among said other clusters a concept name has been chosen with a certain likelihood lying beyond a threshold, suggesting this concept name as the concept name for the cluster actually to be named.

According to one embodiment said method further comprises:

providing a context model implemented by formalizing general world knowledge and actual qualitative context information coming from the cluster context streams with respect to one formal language; providing an inference engine, which is able to compute all consequences of a given set of axioms, based on said information received.

According to one embodiment said method further comprises:

applying situational reasoning by combining one or more context elements and/or one or more conceptualized clusters which have been assigned a concept name by a logical expression to enable said logic engine to automatically classify a user's situation as belonging to a type represented by certain concept name based on the available context information.

This allows situational reasoning based on sensed context data.
According to one embodiment said method further comprises:

performing a consistency check if a newly assigned name is added to the concept space by applying automatic classification is applied to check whether the newly assigned name is making sense with respect to the knowledge which is already coded in the ontology.

Consistency checking is helpful for the user to keep the overall world knowledge self-consistent.
According to one embodiment said mobile device receives a plurality of different context data streams, and carries out clustering for said different context data streams independently to obtain independent clusters for each context data stream.
According to one embodiment the method further comprises:

tracking the qualitative context of a user of a mobile device by storing the qualitative context as given by the one or more concept names assigned to clusters in a qualitative context history storage.

According to one embodiment the method further comprises:

providing an interface for querying or analyzing said qualitative context history, and generating of new documents or information sets based on the history of qualitatively tracked user context.

According to one embodiment the method further comprises:

monitoring the context situation of the user by monitoring the concept names, which are indicative of the user's context at a certain time; if the context situation of a user as indicated by one or more concept names fulfils a predetermined condition identifying a particular qualitative context, triggering an action to be performed by the mobile device of the user.

According to one embodiment the method further comprises:

activating a specific mode or function of the mobile device;
sending a notification or an alert;
ad-hoc grouping of users in similar qualitative context
adding automatic annotations to user data based on qualitative context;
automatic generation of new documents based on the history of qualitatively tracked user context

According to one embodiment there is provided an apparatus for automatically determining a semantic classification to context data obtained by a mobile device, said apparatus comprising:

means for sampling by said mobile device one or more context data streams over time;
applying a clustering algorithm to identify one or more clusters in the sampled context data;
a logic engine to automatically determine a concept name from a set of predefined concept names as a semantic classification of said one or more clusters;
means for assigning said concept name to said one or more clusters or suggesting said assignment to the user.

According to one embodiment there is further provided an apparatus comprising means for acting as a method according to an embodiment of the invention.

**DESCRIPTION OF THE DRAWINGS**

Fig. 1 schematically shows a process according to an embodiment of the invention.
Fig. 2 schematically shows a process according to an embodiment of the invention.
Fig. 3 schematically illustrates locations according to an embodiment of the invention.
Fig. 4 schematically shows a process according to an embodiment of the invention.
Fig. 5 schematically shows a process according to a further embodiment of the invention.
Fig. 6 schematically shows an example of the formalized representation of world knowledge.
Fig. 7 schematically shows a further example of the formalized representation of world knowledge.

**DETAILED DESCRIPTION**

In the following embodiments of the invention will be described by referring to the accompanying drawings.
Embodiments of the invention allow end-users to assign a semantic meaning to the machine learning results by linking it to a formal knowledge base in an easy manner. This way, the inferred results become interpretable for applications, to adapt their behavior in an automatic fashion, and interpretable for other humans, who are used to talk and think in qualitative terms about context information such as location, body data, or current task. This latter point is made very clear by just asking a user for his current context:

■ When asked "Where are you?" he will say "in the office" and not "my location is Baker Street no. 10"
■ When asked "What is your heart rate?" he will say "high" or "too low" and not "79 bpm"
■ When asked, "What are you doing?" he will say "taking the elevator to the canteen" and not "my acceleration is -1.3 m/s$^2$".

But how easy this conversion from quantitative information to qualitative information might be for human beings, it is challenging for automated systems to approach these human capabilities.
According to one embodiment a solution to the described problem covers the following:

■ Provide a machine learning algorithm that delivers context clusters that have a value and meaning for the end-user. Clustering in one embodiment shall work in an incremental fashion with a limited time window of context information. The clustering in one embodiment shall not degrade over time, allow cluster joining, and shall be able to learn from user feedback.
■ Provide an ontology that covers the most important concepts, which can be adapted and extended over time based on user input. Reasoning on the ontologies in one embodiment shall ensure soundness and consistency, e.g. to identify and possibly join equivalent concepts.
■ Provide methods and an environment that allows the user to easily relate clusters to the ontology and to easily browse and search through the different ontological concepts.

■ According to a further embodiment there is provided an algorithm for cluster recommendation between users, so that new clusters can be bootstrapped from existing clusters of friends and buddies, or names and classifications can be transferred and personalized.

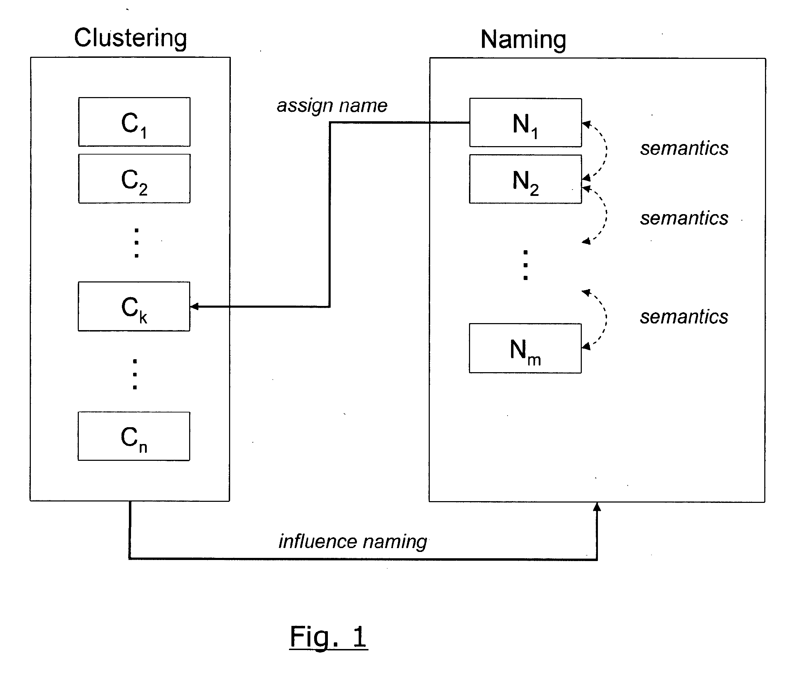

The proposed solution enables the user to link multi-dimensional contextual situations to concepts defined in an ontology. In a first step context clusters are computed which are linked to semantic names in a second step. The two processes are not completely independent, because the results of clustering may influence the latter naming process as illustrated in Fig. 1. For example, an automatic logic engine which determines a name for a cluster receives as an input the cluster derived from a clustering process, and then based on the parameters of a cluster the engine assigns a name to said cluster. This will become more apparent in the following description.

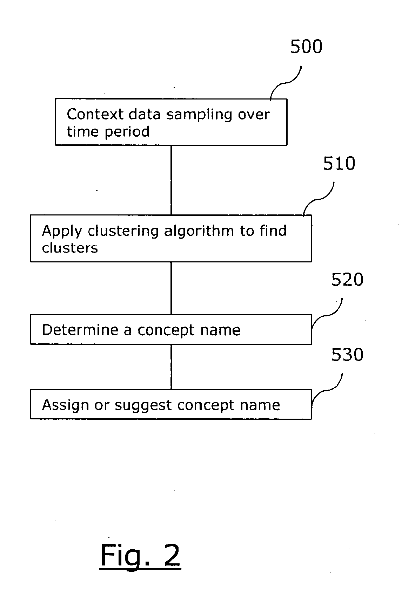

Fig. 2 shows a flowchart illustrating a process according to an embodiment of the invention. The process is executed on a mobile device, which in operation 100 samples context data over one or more time periods. The context data may be e.g. location information, such as GPS information or the information of a cell ID of a cellular phone network. One or more streams of context data may be sampled in this manner.

Once a sample period is over, in operation 110 there is applied a clustering algorithm to identify clusters in the sampled data. Clustering algorithms are known in the art, and in principle any clustering algorithm may be applied in operation 110. The clustering algorithm then results in clusters of the context data, e.g. one or more certain location areas may show up as a cluster, or one or more cell Ids may show up as a cluster. The thus resulting cluster may in one embodiment be combined or merged with clusters from other sampling periods, so that the clustering evolves over time.

After the clustering step then in operation 120 there is determined a concept name for one or more of the clusters found in operation 110. The concept name may be a label, which expresses the properties of the cluster by a qualitative term rather than in absolute values of the sampled context parameters. As will be explained in somewhat more detail later on this automatic determination of a concept name is made by referring to logic engine which may include a set of one or more rules representing knowledge about how likely it is that a certain concept name of a predefined ontology should be assigned to a cluster found in operation 110. The logic engine therefore represents in some sense "knowledge" about how the clusters should be labeled or "named" using qualitative name tags, which are taken from an ontology of names.

In operation 130 then the thus inferred or determined concept name derived in operation 120 is assigned to the cluster or a suggestion is made to the user to assign this concept name to the cluster.

With such a mechanism, for example, it is possible to detect the frequently visited locations and often traveled paths of a person from location traces recorded over a longer time period in an automatic manner. Note that location here can be expressed absolutely in terms of geo-location or room number as well as relatively to moving or fixed beacons, like GSM antennas and Bluetooth beacons. In many cases, home and office locations are among the first ones to be detected. Although both of these concepts (home and office) have their representation in the formal knowledge, one may distinguish several techniques of different complexity and data requirements to make the connection between a cluster and a concept name. All of these techniques have in common that they use a logic engine which makes use of a representation of knowledge (e.g. expressed by rules or by another machine representation of knowledge, e.g. using axioms) and which based on the parameters of a cluster run the knowledge engine (e.g. by applying the rules with the parameters of the cluster as an input) to arrive at a conclusion which of a set of concept names to chose as a name for the cluster. Several approaches can be followed to implement such a logic engine, some of which are listed in the following:

■ Rule driven: automatically or semi-automatically assigned by heuristic rules. E.g. the place where a user spends most daily hours is probably his office.

■ Data driven: automatically assigned by statistic processes over previously observed data. E.g. most users assigned *downtown* to clusters in the area around Marienplatz, Munich,

■ Model driven: based on a formalized background knowledge, logical inferences can be used to transfer concept assignments between related users and, in some cases, to make the assignment completely automatic based on logical classification results. E.g. a pre-selection of recommended place concepts is provided to the user based on what can be inferred through the user's social relations. When a colleague A regularly visits user B's home, at some point this might be recommended to A as 'colleague B's home'.

The set of possible concept names from which the logic engine chooses may be part of an ontology. An ontology in computer science may be seen as an is an explicit specification of a conceptualization, whereas a conceptualization is an abstract, simplified view of the world that is to be represented. Any body of formally represented knowledge is based on such a conceptualization, and an ontology is a specification of such a conceptualization. In the context of artificial intelligence, one can describe an ontology by defining a set of representational terms. In such an ontology, definitions of representational terms associate the names of entities (like in the present case of "clusters") with human-readable text describing what the names mean (their "semantic meaning"), and formal axioms that constrain the interpretation and well-formed use of these terms. Formally, an ontology may therefore be regarded as the statement of a logical theory, and in the embodiments of the present invention the ontology (comprising the possible set of concept names) therefore represents at least partly the knowledge about the world of context parameters and their possible meaning.

The "knowledge" about concept names according to one embodiment is implemented by some logic engine. By receiving as an input the parameters of a found cluster (e.g. the time boundaries as well as the geographic location) the logic engine which has been fed in advance with the "knowledge" represented by the ontology may e.g. determine that the time boundaries of the cluster lie within typical office hours. The corresponding rule may e.g. look like "if the time boundaries lie after 8:00 am and before 6:00 pm every workday, with a duration of more than 4 hours every day as a given condition", then conclude that, the cluster having these time boundaries should be labeled "office". Such a heuristics may be implemented in the logic engine together with other further heuristics.

Another implementation may e. g. be "if there are significantly many (beyond a threshold) other clusters in close proximity (e.g. within a certain distance threshold), and if a certain fraction of these clusters or more have the same label (e.g. downtown), and if further the areas of these clusters overlap to at least a certain percentage with the new cluster to be labeled, then assign the name of the already existing clusters to the new one. In such a manner the data driven statistical approach mentioned above can be implemented.

The model driven approach also can be implemented by a set of rules, with the set or rules becoming more complex as the model becomes more sophisticated. Such a model implementation may also go beyond mere rules but may involve logical inferences based on machine-implemented axioms.

Another (non-automatic) approach is the manual determination of the concept name. In this case a newly discovered cluster (e.g., place) is notified to the user and the user is asked to provide the semantics by selecting the corresponding concept from the ontology. This approach is useful for cases where the automatic determination of a concept name fails or is to be corrected by the user. Preferably in this approach the user interaction is made as convenient and self-explaining as possible, in order to get the user involved despite realistic knowledge bases tend to be rather complex.

For the rule driven approach the manual construction of appropriate rule systems by the system developer is necessary. Depending on the embodiment and the efforts made to define and program a rule set which is as accurate and complete as possible, the performance of the concept name determination may vary. However, even at an initial phase this approach works.

The data driven approach can only work reliable if a large amount of data is already available and is therefore not appropriate for bootstrapping.

Finally, the model driven approach requires an elaborated logical modeling of the context domains, which is also a task for the system designer who designs and implements the model.

With this methodology described before, it becomes easier for users to exchange location data at a qualitative level because this approach supports the generation of clusters and the assigning of names to them on a qualitative level. Through automatic clustering and naming recommendations (or completely automatic naming), it is made easy to maintain a personal collection of favorite locations, driven by real presence in those locations and their social relationships with other people.

Besides the flexibility gained by the use of a rich background model separated from the core algorithms with the known positive effects on maintenance and software quality, the formal modeling allows to verify consistency of the given context data (and also the model itself) and to apply sophisticated explaining techniques. Consistency checks are very helpful in a system with many different contextual inputs and derived higher-level context, since conflicts are likely to occur, e.g. according to a Bluetooth scan the user is supposed to be at home, while his GSM derived location pinpoints him a few blocks away. It is explainable that the most accurate reading prevails in this case

In the following further embodiments will be described in somewhat more detail.

One may define context clusters as triples of the form

*<Name, Type, Specification>*

with *Name* a user defined name of the cluster, *Type* a reference to a concept defined in the ontology specifying its qualitative value and *Specification* a structure holding all context data that defines the clusters, such as a set of context state vectors in a discrete space and additional meta data. Meta data could e.g. include the importance of a cluster for a user, or the amount of time he already spent in this cluster, or any other parameters that might be required to update the clusters incrementally.

In the following we will make the abstract construct of context clusters concrete by defining location clusters that can be used to define places. It should, however, be noted here that the location data is just one example of context data and the invention may as well be implemented using other context data such as medical data (heart rate, etc.) economic data (spendings, data from RFID chips of goods, etc.), data of beacons identifying a certain person (or its device), or any other data sampled as context data.

It will be clear for the skilled person that the mobile device is capable of sampling the context data, e.g. by a GPS receiver, RFID devices, or any other devices which enable it to carry out the sampling. The processing of the sampled data may be done in the mobile device or it may be carried out at a remote computer.

In the following explanation usage will be made of location data or data of "places" as context data. There exist different ways of characterizing places, which are often mutually incompatible. Therefore, it is important to define the place concept used for tagging and clustering, since every definition has its own advantages and disadvantages, and changing from one definition to another might come with substantial implementation costs and data incompatibility, probably resulting in loss of data in operational systems.

In this embodiment, the focus lies on 2D classifications of places, leaving out the third dimension. One may assume that all defined places coincide with the earth's surface. This is driven by the fact that automatic methods to detect the third dimension (height, altitude, or floor) are highly inaccurate and hence unreliable. This is true for both altitude detection with a GPS in urban areas and for floor detection used beacon-based techniques such as WiFi or Bluetooth. The result is that the place concept explained in the following can not distinguish between two floors in a sky tower or distinguish between a castle and the cellar underneath, however, if such context information can be reliably obtained, the concept may be extended to use also this context data..

However, even considering only two dimensions, many different definitions for places exist:

1. Pinpoint, a location expressed by a geo-location only (latitude, longitude) in (degree, degree)

2. Circle, a location expressed by a pinpoint with a radius (latitude,longitude,radius) in (degree, degree, meter)

3. Rectangle, a location expressed by a southwest and a northeast pinpoint (pinpoint, pinpoint)

4. Rectangles, a collection of uniform rectangles (rectangle[])

5. Polygon, the area enclosed by a polygon defined by an array of pinpoints. (pinpoint[])

6. Beacon, the area covered by radio beacon (GSM, WiFi, Bluetooth) defined by the beacon id.

7. Hybrids, areas specified by collections of definitions 1-6, e.g. an area (4) together with an array of GSM beacon (6).

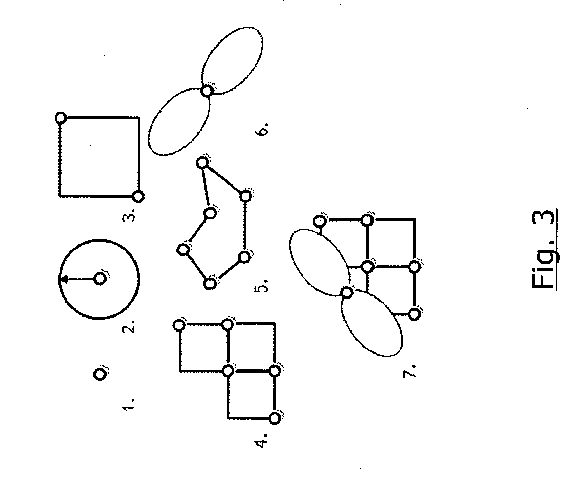

Figure 3 visualizes the different concept of places.

Each concept has its own advantages, disadvantages as well as applications. In the following, these will be briefly discussed for each concept.

1. Pinpoint, useful for easy manual tagging of places by the user. It does not require any human skills to estimate distances or regions; a simple pinpoint of a location is sufficient. For automatic purposes this is less suitable, since any accuracy estimation is missing. However, accuracy might be obtained from multiple users providing pinpoints of the same place concepts (a posteriori, and with increasing accuracy).

2. Circle is a logical way to present location with a certain accuracy, such as a location obtained from a GPS receiver. It is less feasible to present more complex areas as a collection of smaller circles, because overlaps cannot be avoided. It is computationally less efficient to calculate in case a certain latitude-longitude pair is covered by a circle.

3. Rectangle is a logical way to compute the smallest container of a collection of pinpoints. This is computationally very efficient to compute containment relations and can easily be used to define a continuous area by a collection of rectangles. Data reduction is possible because in some cases collections can be expressed as one larger rectangle.

4. Rectangles, a flexible and computationally efficient way to describe areas, which are not necessarily continuous. The containment computation is linear with the number of rectangles, but can be made even more efficient by compression. Best results are obtained if all rectangles are integer multiples of the atom rectangle. The dimensions of the atom determine the granularity. This one is not so easy to adapt by humans, best suited for computer-generated areas.

5. Polygon, a flexible and intuitive way to describe a continuous area. Easy to adapt by humans, but more complex to generate the smallest container polygon for a collection of pinpoints or circles. In worst-case scenarios, the form of the polygon becomes very complex and containment calculations are linear with the number of nodes in the polygon. It is less suited for computer-generated areas with many nodes.

6. Beacon, an amorphous area defined by the positions where the beacon's signal can be received. Containment relations are very simple, but conversion to other geo-based locations is more complex and based on other samples as well.

7. Hybrid, a powerful way to express areas that is less dependent on the underlying technology and available data. Presence in hybrid places can be detected even if one of the underlying technologies (GSM, GPS, WiFi) is (temporarily) unavailable.

For reasons mentioned above, in one embodiment there is uses the hybrid place concept in this example, where places are expressed as the combination of a collection of beacon coverage areas and a collection of rectangles. Therefore, compositions and dynamic extensions of a place are easy and containment computations are computationally efficient. At the cost of more complex human adaptation of a place and a predefined granularity (hard to change during run-time), the computer-based generation of places is straightforward.

According to one embodiment location clustering involves finding the peeks in the 2D visualization of someone's geo-location traces expressed in latitude and longitude by applying some clustering algorithm. However, in another embodiment there may be used more complex sets of context data, where e.g. location clustering involves several context streams 1) to make the system more robust in case one of the streams is temporarily missing and 2) to be able to distinguish between different contextual situations, e.g. "working in the office" versus "passing by the office after a dinner in the city".

In the embodiment described in the following there are the following context data streams:

■ Geo location, expressed in latitude and longitude, which might be directly obtained from a GPS sensors, or indirectly derived from the known position of a detected static beacon

■ Relative location, expressed in terms of nearness to a detected beacon. This might be a GSM antenna, or Wifi access point, but also a friend's phone being detected

■ Inferred location, when the location of a nearby friend can be requested, that is also a measure of the user's location

■ Speed, to discriminate between a stay in a cluster and just passing by.

■ Day of the week, because people tend to have a weekly pattern

■ Time of the day, because most people have a daily pattern, e.g., business hours in the office, night hours at home.

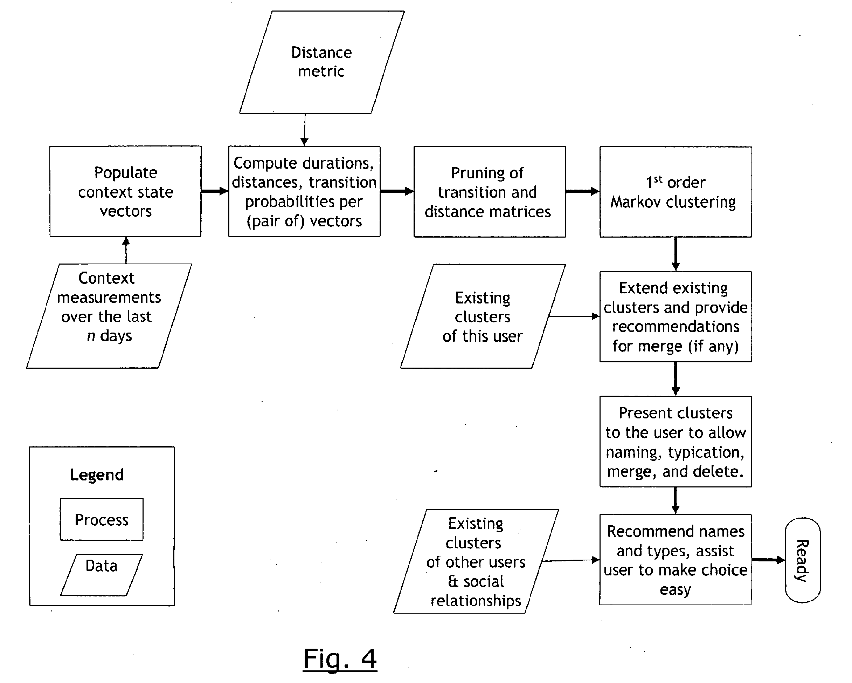

The method according to one embodiment will now be described in connection with Fig. 4. Context data streams are described in context state vectors as a function of time, and they result from context measurements (e.g. over the last n days). These measurements are then used to populate the context state vectors. One may note that the latter two dimensions of the state vector (i. e. day of the week and time of the day) are in fact sawtooth functions used to reduce the complexity of the solution space.

Each state vector corresponds to a certain measurement time period (the "sampling period"), and it is uniquely identified by an id. State vectors may have relations between each others, because of missing data: some are more (or less) specific versions of other state vectors.

Once the state vectors have been populated, some preprocessing may be executed before the actual clustering algorithm is run. E.g. the geoposition obtained from GPS may e.g. be converted into data of a predefined grid covering the area of interest, so that the locations may be expressed as elements of the grid like points, rectangles, or the like, so that a geoposition then corresponds to a position in the grid. In this manner the granularity of the data can be somewhat decreased and the calculation power necessary can be reduced as well.

Based on the state vectors then durations, distances, and transition probabilities between pairs of state vectors may be calculated. After pruning of the transition and distance matrices, there is then performed a first order Markov clustering by building a first order Markov matrix A of the state identities. This can be done on different levels, ranging from most specific to least specific. The transition probabilities are pruned to zero when

- the number of occurrences is too low to reliably calculate the transition probabilities
- the transition probability is close to zero to prevent noise
- the distance metric between the two states is too high

The distance metric between two context states is binary for most of the context state values (0 is the same, 1 is different) but for geo-gridpoints we use the distance in terms of grid dimensions (so 1 for neighbor grid points, 2 for neighbors of neighbors, et cetera). The distance between two states is then computed as the sum of the distances between the values in those states. This results in a more sparse Matrix that allows for more efficient clustering. Then there is performed a first order Markov clustering by building a first order Markov matrix A of the state identities.

Because of missing data, context states have relations, state A can bet the same as B but with the actual geo-location missing, in this case A is "less specific" than B. By computing the powers of the Markov matrix and reordering the rows and columns to form blocks along the diagonal, one can find blocks of states that somehow belong together and have frequent inter-block transitions. Such a block is called a context cluster, and characterized by the states it contains. The clusters detected in the most recent time period are then merged with the existing cluster base (resulting from earlier sampling and clustering), thereby resulting in extension or even merging of existing clusters.

The thus obtained clusters may then be named by concept names obtained by running the logic engine, which will be explained in somewhat more detail later.

In the present example, the distance measure between two context state vectors is based on

■ The physical distance between the two states, if available

■ The distance between the two cells in the states, if decidable

■ The time difference between the two states

If the computed distance between two subsequent state vectors is above a certain threshold, this is not counted as a transition in the Markov matrix. This way unlimited growth and cluttering of clusters is prevented. It is preferable to apply this distance threshold in an application working with real-life context data. Although the context data streams are supposed to be continuous, it might happen that for some periods data is missing (e.g. the user closed the application), the data communication fails or the user drives through a tunnel.

According to one embodiment a detected cluster is proposed to the user for naming (and with a suggestion for a concept name) if the total duration of stay in that cluster exceeds a threshold of h hours within d days. In practice, it might sometimes take longer than these h hours before the cluster is proposed, because not all context states and transitions are directly assigned to one cluster with the limited amount of data available. The user may accept a new cluster (and then name and classify it) or deactivate the cluster if it is meaningless to him, or merge the cluster with one of the existing clusters if that resembles reality better. Mergers according to one embodiment are also proposed by the clustering mechanism, e.g. a merger is proposed if a new cluster candidate would form a bridge between existing context clusters. This way, merging clusters is made easy for the user, but it cannot result in undesired cluttering of clusters.

Because of the different dimensions of the context state, presence in these states can be detected quite precisely. This results in the ability to separate between an actual regular stay in a cluster and just passing by. E.g. if the speed of movement is a component of the context state, and if the speed is beyond a certain threshold when the location information indicates that the location is at the office or close to the office, the system may conclude that the user is just passing by. Additionally, this algorithm supports the detection of different types of meeting situations with buddies, and is able to distinguish between 1) a static meeting with a buddy, 2) traveling with a buddy, and 3) the accidental meeting (when paths collide with a buddy). This distinction similarly may be based on the speed parameter in addition with location information and beacon information indicating that the buddy is close.

In the following a concrete example of the clustering algorithm will be described.

This somewhat simplified example shows the transition between 4 context states. The context state vectors are also simplified and contain only [cell id, grid id, weekday id]. The cell ID is e.g. the ID of a GSM cell, and the grid ID is the ID of the grid element where the user is located at the moment, and it may be derived from GPS information in connection with the information about the grid, which has been defined beforehand by the system designer. In the following there is provided the example for a normal Monday, with weekday id equal to 1. So the context state space is spanned by these four context vectors.

$$C = \begin{bmatrix} ID_{cell} \\ ID_{grid} \\ ID_{weekday} \end{bmatrix}, C_{1-4} = \begin{bmatrix} 1 \\ 1 \\ 1 \end{bmatrix}, \begin{bmatrix} 2 \\ 1 \\ 1 \end{bmatrix}, \begin{bmatrix} 3 \\ 2 \\ 1 \end{bmatrix}, \begin{bmatrix} 4 \\ 3 \\ 1 \end{bmatrix}$$

The transition matrix T is

$$T = \begin{bmatrix} 0.7 & 0.2 & 0.4 & 0.0 \\ 0.2 & 0.6 & 0.4 & 0.0 \\ 0.1 & 0.2 & 0.0 & 0.1 \\ 0.0 & 0.0 & 0.2 & 0.9 \end{bmatrix}$$

Based on the distance matrix D between the states

$$D = \begin{bmatrix} 0 & 1 & 2 & 3 \\ 1 & 0 & 2 & 3 \\ 2 & 2 & 0 & 2 \\ 3 & 3 & 2 & 0 \end{bmatrix}$$

and the duration-of-stay vector $\vec{s}$ per day

$$\vec{s} = \begin{bmatrix} 8.8 \\ 6.4 \\ 0.4 \\ 8.4 \end{bmatrix}.$$

one finds a new cluster formed by states 1 and 2, with a maximum mutual distance of 1, and a total average duration of stay equal to 15.2 hours per day. In this -artificial-example this is caused by the stay versus leave ratio of the new cluster of 85%/15%, combined with a duration of stay of 63.3% of the inspected time period. In practice, based on real data, clusters are formed of many more than 2 context states, typically between 5 and 15, but many more is also possible.

It should be mentioned here that the approach using Markov clustering is just one possibility of identifying clusters in the sampled context data. Other clustering algorithms may be used as well to obtain clusters of context state vectors.

In the following there is provided the definition of a location cluster, as it is used in the algorithm according to an embodiment of the invention:

■ A name, chosen by the user

■ A type, representing the relation to the spatial ontology

■ A collection of context state vectors that span the cluster

■ An estimated geo-location, a weighted average over all location measurements in this cluster

■ A user, the owner of the cluster

■ Meta data, including the total duration of stay, a reference to the last location

measurement in this cluster, merge recommendations et cetera Some examples of cluster instances are given in the following.

The two most common clusters are home and office. To give an impression of cluster information available in a real life system there is provided an example for a user located in Enschede, The Netherlands, in Table 1.

**Table 1: Representation of two clusters of the same user**

|  | Home | Office |
|---|---|---|
| **Last seen here on:** | 2006-11-08 09:15 at Melodiestraat, Netherlands. 667 records. | 2006-11-08 13:47 at Fazantstraat, Netherlands. 417 records. |
| **Name:** | Home sw eet home... | TI Office |
| **Type:** | Home | Office |
| **Owner:** | Johan | Not specified |
| **Status:** | Active | Active |
| **Weekdays:** | Sun Mon Tue Wed Thu Fri Sat | Mon Tue Wed Thu |
| **Day parts:** | Night Morning Afternoon Evening | Morning Afternoon |
| **Cell IDs:** | 0 9916 9917 23403 | 6 7 8 940 941 6699 |
| **Grid IDs:** | 26 30 262 270 2167 | 0 1 56 10694 |

This allows the user to adapt his own cluster information in terms of *name, type, owner* and *status.* The *type* is linked to the available place concepts in the ontology, and the *status* can be set to inactive to prevent presence detection while being in that cluster, if desired. Additional information is generated by the system and includes the last presence in the cluster and the cluster definition derived from real-life data. From the example it is clear that the user is a normal office worker, who does not work on Fridays, and during normal business hours. He is at home during all parts of the day but mostly during evening and night (larger fonts indicate higher frequency of occurrence). While being at home the user can be connected to 4 different GSM cells of different operators, but most frequently to one cell with ID 9916. The geo grid for each cluster clearly covers more than one grid point, with some grid points more frequently detected than others. This frequency is used to calculate a reliable average geo-location for each cluster. For example in the office grid, ID 56 is most frequent. This information can be used to calculate data-driven personal business days (in the example Mon-Thu) or even personal business hours (in the example 09:00-18:00).

In the following there will now be described in somewhat more detail how the logic engine operates which determines concept names for the clusters derived from the clustering algorithm. In one embodiment such a logic engine makes use of an ontology, which is predefined by the system designer and - at least in part - represents knowledge about the real world.

Context ontologies are applied to formalize a certain domain of interest to provide a common vocabulary for different application scenarios. Therefore, different context domains are linked to concepts represented within the corresponding ontology. Subconcepts further differentiate higher-level concepts, which cover a broader understanding of a certain real-world object. To give an example, one conceivable sub-concept relationship would be the assumption that an *Office_building* is one particular *Building.* In addition to these hierarchical structures, concept definitions may also comprise additional logical statements (e.g. disjointness: "an *Office_building* is not a *Private_place"*) or other logical statements as illustrated in the following concept definition.

$$\text{location} \in \text{Office} \sqsubseteq \text{time} \in \text{Office\_hours} \sqcap \text{bt\_scan} \in \text{Office\_environment}$$

The above definition expresses that a place where the list of sensed Bluetooth devices (bt_scan) can be classified as an *office environment* and that is mainly used during office *hours* can be categorized as *office.*

Properties, in turn defined in a hierarchy (*father_of* is a sub-property of *relative),* also have certain logical attributes. For instance, having defined the colleague relationship as transitive and assuming that A is a colleague of B and B being a colleague of C implies that A is also a *colleague* of C.

To name and classify a cluster manually the user preferably is supported in browsing the ontology for the classification, and name recommendations are given (see recommendations in the next section). Ontology browsing in one embodiment is supported by smart keyword matching techniques based on the name, and suggestions based on classifications by other users (using approximately the same name or geo-location). The power of this methodology is that it only takes a few seconds for the user to find the correct classification for a cluster, which becomes an even more important aspect when accomplished with a mobile device. In case that more than just a few seconds are needed to classify a cluster, the user might avoid the effort, since the long-term benefits are not visible enough to compensate the initial input.

However, rather than on manual naming the invention focuses on automatic determination of concept names for found clusters. Best results for cluster naming and classification are achieved when the user gets a few recommendations that can then be easily adapted. These recommendations result from the execution of the logic engine, which receives as an input the found cluster and then determines based thereupon a concept name. This can be based on:

■ Authority: highly trusted parties such as the local tourism office, municipality or travel agencies might name some places. Inside the logic engine, data from sources with a higher authority might be directly used or at least prioritized above data from sources with a lower authority, e.g. fellow tourists.

■ Heuristics: a set of common rules that are valid for most individuals, e.g. the place where you spend the day (if different from the place where you spend the night) is usually office, work or school.

■ Statistics: recommendations are based on how a larger group of other users named and classified this place. E.g. if 80% of the users named this place 'Saint Mary's church' and classified it as 'church' or 'religious building', this might also be a good recommendation. Ontology reasoning is used to find the concept that has the right balance between specificity and trust. It is clear that this type of recommendations performs better in public places than it does for private places, which are less interesting for larger groups of people and hence have less data available to train the algorithm on.

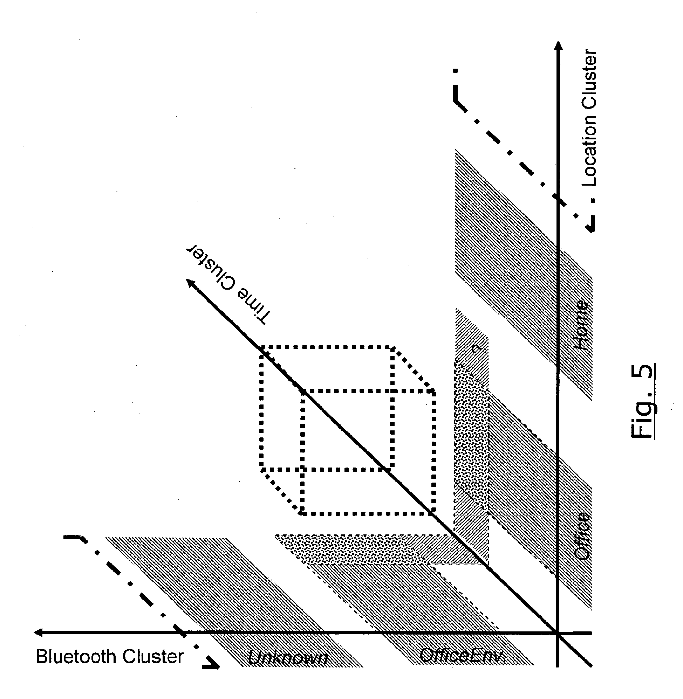

■ Context models: formalized world knowledge is used to support the direct sharing of clusters between users and to directly derive cluster recommendations from the combination of related cluster streams. For example, two users with a social relationship share a cluster, either system- or user-initiated. E.g. when a user visits a place tagged by his colleague as home, this place might be tagged as 'home of my colleague Marko' and as such be recommended to the user by the system. Furthermore, in case an intersection of several cluster streams representing different domains (e.g., time, location and Bluetooth environment) occurs as shown in Fig. 5, suggestion for missing information of one of the clusters participating in an intersection can be derived by logical classification over the corresponding concept definitions. E.g., if the location concept Office is defined as above and one additionally assumes the following definition,

$$\text{time} \in \text{Office\_hours} \sqsubseteq \text{location} \in \text{Office} \sqcap \text{bt\_scan} \in \text{Office\_environment}$$

another cluster concept link, e.g., *Office_hours* for the time cluster (see Fig. 5), can be inferred from the other two (*Office* and *Office_environement*).

One should note that the cyclic dependency between the several definitions is logically not problematic.

The context model-based approach described in the example before can be realized by formalizing both, the general world knowledge and the actual qualitative context information coming from the cluster context streams with respect to one formal language such as the Web Ontology Language (OWL) (see D. McGuinness and F. van Harmelen. OWL Web Ontology Language overview. W3C Recommendation, February 2004) as used to formulate the examples above. The semantic underlying the formal knowledge representation language (a certain Description Logic in the case of the sublanguage OWL DL of OWL) can then be used to apply the world knowledge to the given actual information to derive additional facts, as a result making implicit knowledge explicitly accessible. An overview over the field of description logic can be found in F. Baader et al. The Description Logic Handbook. Cambridge University Press, Cambridge, January 2003. If the semantic underlying the formal language under consideration is decidable (as it is for OWL DL), an inference engine can be implemented that terminates on all given problems (termination) and is able to compute all consequences of a given set of axioms and to detect any inconsistencies in the knowledge base (completeness). For OWL DL, several such inference engines have already been implemented, as e. g. described in V. Haarslev and R. Möller. Racer: A core inference engine for the Semantic Web Ontology Language (OWL). In Proc. of the 2nd Int. Workshop on Evaluation of Ontology-based Tools, pages 27-36, 2003, or in E. Sirin and B. Parsia. Pellet: An OWL DL reasoner. In Proc. of the Int.

Workshop on Description Logics, pages 212-213, 2004, or in D. Tsarkov and I. Horrocks. FaCT++ description logic reasoner: System description. In Proc. of the Int. Joint Conf. on Automated Reasoning (IJCAR 2006), volume 4130 of Lecture Notes in Artificial Intelligence, pages 292-297. Springer, 2006.

Some applications of ontology-based modeling and reasoning will now be described in the following which involves automated reasoning through ontology-based conceptualizations of qualitative context within a decidable fragment of Description Logics (e.g. OWL Lite or OWL DL). Some use cases for automatic classification of such ontologies according to embodiments of the invention are given below.

Context models which are expressed by ontologies can represent the "world knowledge" about a user's situation as implemented by the system designer, and they may be used for situational reasoning to conclude that the user - given a certain situation as sensed by the sampled context parameters - is equivalent to a situation which can be expressed by a certain context name.

Such classification for situational reasoning will now be explained in somewhat more detail by some examples. E.g. multiple conceptualized clusters (named and linked to concepts of the ontology) and/or further context elements that are conceptualized are can be combined as one logical expression to reflect the user's situation (e.g. through logical conjunction, but other strategies for logical combinations are also possible). Subsequently, the newly constructed logical expression is automatically classified with respect to the knowledge which is already coded in the ontology. If existing clusters are thus linked by logical expressions which may include not only clusters but conditions for context parameters to be fulfilled, this may lead to a new cluster which then has to be assigned a new concept name. As a result, through classifying the new situational logical expression by assigning to it a new concept name in the ontology, a qualitative statement about the user's situation can be made, e.g. given certain conditions it can be concluded that the user is in a situation expressed by the newly assigned concept name..

This will become more apparent from the following examples.

One example for the application of logic based reasoning mechanisms to represent the user's current situation can be described as follows: Assuming that the surrounding context information of the user (e.g. the people in proximity or the time of the day) has been modeled in a way such that qualitative statements can be made, a collection of contextual data can be described, combined and eventually classified within the ontology.

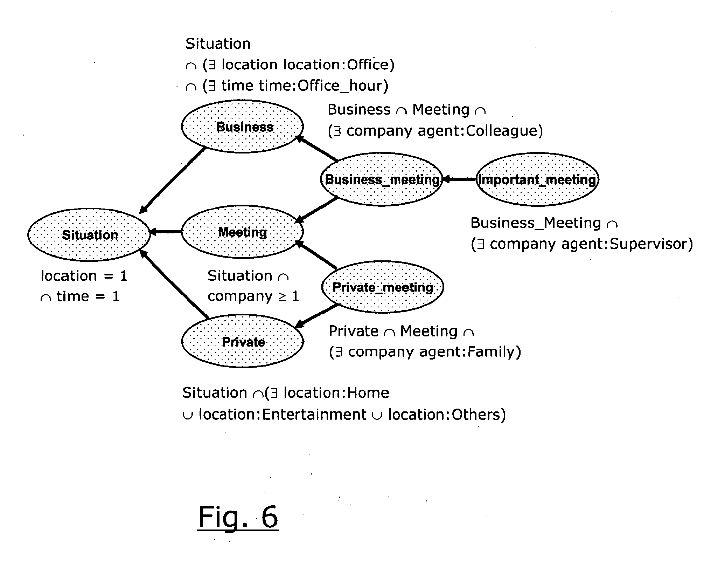

To give a concrete example, a situation could be sufficiently described as an occurrence attended by more than 1 person; where one of these attendees must be the supervisor of the central entity while the meeting takes place at one's personal "Office" cluster during "Office_hours". Based on the knowledge conceptualized within the ontology, as shown in Figure6 which illustrates a formalized representation of world knowledge where context parameters and concept names are combined by logical expressions, this situation is classified as an "Important_meeting", since all necessary conditions are satisfied in order to assign this situational instance to the homonymous ontology concept.

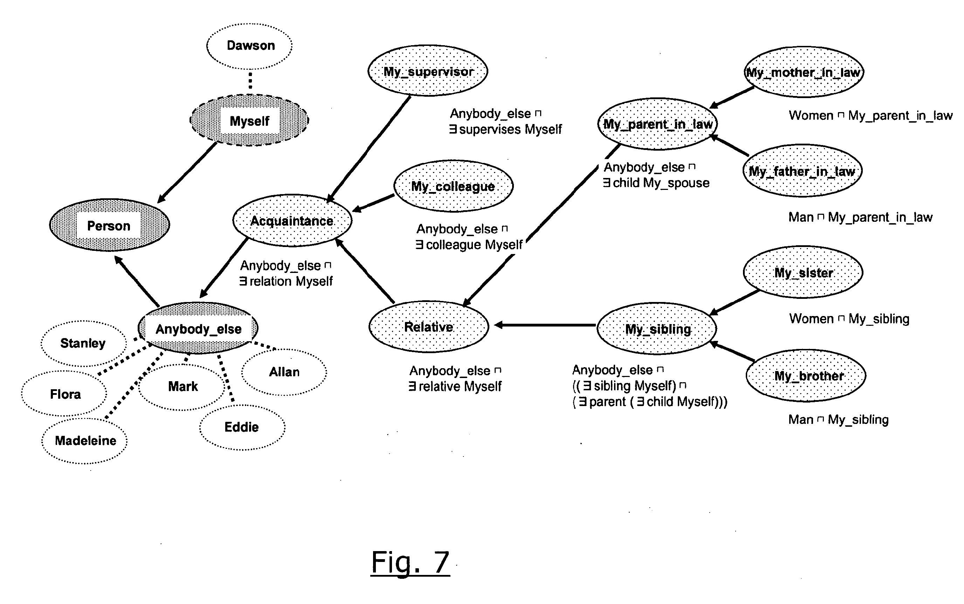

According to a further embodiment ontology-based reasoning can ensure the consistency of derived information. As described before already, the existence of different context state vectors enables the inference of additional facts about the user's surrounding. A more concrete example will now be given by referring to Fig. 7 which shows formalized world knowledge about social relationships, and this knowledge will be applied to execute some reasoning in the following example.

For instance, the social context of a user (the user's social relationships to people that he meets on a regular basis) can be predicted to complement the network of his social relationships. As an example, assuming that a male user's historic context data shows that he normally spends his nights with some woman (so far unknown to the system), and assuming that his martial status is know to be married, this woman can be assumed to be his wife (cf. Fig. 7). However, in case another woman has already been defined as his wife, such conflict can be automatically detected and processed/handled accordingly.

In the user context the social role "Wife" must therefore be adequately defined. More precisely the wife relationship must have been defined as functional with properties may stated to have a unique value (cf. OWL DL standard). As a result, consistency checks help to further improve automatic inference techniques based on existing facts that have been verified beforehand.

In the described manner embodiments of the invention allow to implement a logic engine operating as described above and determining a concept name or a suggestion of a concept name for a cluster found as a result of the clustering algorithm.

As an alternative to this logic-based realization of the context model approach, it is also possible to apply a rule-based system. In this case, the world knowledge is formulated as a list of if- then rules and the facts as literals. A rule engine can make the implicit knowledge explicit by matching the rule premises with the given facts in either a forward or a backward chaining way and adding the corresponding conclusions to the fact base. However, most rule systems lack a properly defined semantics and therefore completeness and termination of the inference process often cannot be guaranteed leading to situations were inference results depend on the concrete strategy implemented in the rule engine in use. One may note that cyclic definitions, as the ones intended in the examples above, are especially demanding here, but do not pose any problem in a logic-based setting.

In the foregoing there has been described a way of clustering real-life contextual data into larger clusters of coherent data and further a methodology for semantic naming of these clusters, grounded in a formal ontology. In the described examples these techniques are applied on location data as the primary example.

While user traces and places are often not only specific locations that can be pinpointed on a map, but rather regions that may be qualified at a qualitative level ("Downtown", "Way to work", etc.). Additionally, places are not only described in terms of an absolute geo-location, but can also be expressed relatively to existing beacons, such as GSM antenna's or WiFi hotspots, which may fluctuate over time for a fixed geo-location. For this reason, it is not at all easy and convenient for a human to describe personal favorite places in such terms that his or her presence in those places can be detected by an automated system.

However, in the foregoing there has been described a methodology to recognize those important places automatically from the user's historic location tracks, to propose these detected places to the user, and to allow him to name and classify the place in an easy manner based on a suggestion from the system or completely automatically. Once the new places are registered, they can be adapted (both manually and automatically based on new traces), shared with other users, or used to recommend names and types of places to other users. Context ontologies capture essential spatial concepts and types to support the management of and the reasoning about places. With the proposed approach it becomes easier for users to exchange location data at a qualitative level, as opposed to exchanging raw context data like geo-location or street names, which have less or even no meaning to other users

Moreover, using the proposed methodology it becomes easier to have qualitative context information to support context- and presence aware mobile applications. The context information is real-time and yet at a level that is easy to interpret for the reader, while at the same time it takes no or little effort for the user who provides the information. In particular, user presence is a feature that is nowadays already widely recognized and deployed, albeit at a very basic level. Examples include buddy lists common in many instant messaging, or mobile and social applications, like MSN or LinkedIn. These buddy lists can then be extended with real-time qualitative context information about the user. In that way the functionality of mobile devices can be significantly enhanced.

The examples described hereinbefore used location data as context data. However, it will be readily apparent that any type of context data can be handled in the same manner as described in the foregoing embodiments, i.e. by detecting clusters in the data and running a logic engine which represents world knowledge to obtain a concept name for a cluster. The data, which may be clustered, automatically or semi-automatically classified and tracked/monitored may e.g. include medical data (heart rate, etceteras), commercial data (e.g. tag data read from RFID chips which are attached to products in a supermarket, tags at specific locations like public transport vehicles, specific locations like sightseeing locations, etceteras). This other data may also be clustered and automatically named with concept names by providing a suitably defined and programmed logic engine.

Embodiments of the invention can be applied in user tracking and easy classification of places that are characterized in such a way that presence in those places can be detected automatically. This may include automatic detection of personally important places as well as semantic classification of places, which includes reasoning on these places based on ontologies. Since the qualitative context is automatically determined at any time based on the context state vectors and the named clusters, this can be used to determine a qualitative context of the user at any moment. Moreover, this qualitative context can then be used for acting depending on the context the user is in, which may involve the detection of relevant context situations like relevant locations or other relevant contextual situations of the user.

For the purpose of user tracking the qualitative context may be tracked and stored in a database. In the database the concept names which identify the present situation of the user may be stored together with the time. The qualitative context information may include a single or multiple concept names derived from multiple context data streams and from logic inference as described before. In this manner a user's present situation is described and identified by qualitative terms, the concept names. Storing these kind of "situation indicators" leads to a context history, which is enriched with qualitative context and stored in a database for later reference. The thus stored qualitative context history may be queried or analyzed, e.g. for identifying the time spend at locations like "home" and "office", but also for the purpose of more complex analysis which links events to contextual situations like "show me all phone calls during a specific context situation", like e.g. "home". Due to the qualitative character of the context information (e.g. "home" or "office" instead of geographic coordinates) querying the context of the past can be made more intuitive and easier. The ontology or taxonomy of the concept names may be displayed by the query interface for assisting the user with entering a query. Using the qualitative terms context items related to e.g. situations like "Important_business_meeting" can be retrieved.

However, the tracking of such qualitative context history is not only useful for analysis and retrieval, but also for other applications. The qualitative context tracking may e.g. be used for the triggering of action based on such qualitative tracking, i.e. the detection of the user's situation. Based on the (qualitative) user situation/context, e.g. "Office" or "Home", actions may be performed or triggered which depend on the instantaneous user's context.

In one example a particular profile on the user's device (phone) can be activated, e.g. to mute the phone or to configure a call forwarding (e.g. if the qualitative context is "conference").

As another example, particular privacy settings can be activated for the user, e.g. what portion of the personal context is visible to whom can be determined based on the user situation. For instance at "Office" all the colleagues have access to all context, at "Home" there is only a limited access to the user himself or members of a "privacy group" like his family. More generally speaking, qualitative context information or related information (like the user's ID, and any information he is willing to share) can be shared with others, e.g. with members of an ad-hoc network who are in the same qualitative context situation. For that purpose there may be defined a set of rules determining which information should be shared with whom under which condition.

As a further application of qualitative context tracking reminder or a notification could be activated. For instance a message containing a reminder can be pushed to the user as soon as she is entering a particular qualitative context (situation), e.g. "Office" or "Home".

As another example, ad-hoc grouping of users in similar qualitative context can be done, e.g. a buddy list of important contacts can be grouped based on whether buddies are at "Home" or at the "Office".

In one embodiment automatic annotations based on qualitative context can be added to photos taken by the user. For instance, tags (significant data items from the user context like time, place, could be used to annotate all recent photos taken during "Leisure_time". This can be done by some setting in real-time, e.g. each time if a user takes a photo during leisure time, or it can be done later by querying the context history and performing the tagging on the query result.

As a further example, automatic documents like Blogs (Web-based diaries) can be realized based on the history of qualitatively tracked user context, e.g. the personal blog could highlight the data recorded (like photographs taken or any other data recorded) within a particular qualitative context like "at_a_Party".

As an even further example POI (Point-of-Interest) filtering can be realized based on the user's qualitative context, or service recommendations can be realized based on the user's qualitative context.

It will be readily apparent to the skilled person that the methods, the elements, units and apparatuses described in connection with embodiments of the invention may be implemented in hardware, in software, or as a combination of both. E.g. the functionality described hereinbefore may be implemented in a mobile device like a mobile phone or a smart phone having a suitable hardware (like sensors for detecting the real-time context information) and a suitable software, which causes the mobile phone to act as, described.

In particular it will be appreciated that the embodiments of the invention and the elements of modules described in connection therewith may be implemented by a computer program or computer programs running on a computer or being executed by a microprocessor. Any apparatus implementing the invention may in particular take the form of a mobile device such as a mobile phone, a smart phone, a PDA, or anything alike, whereas the software running on the device may implement only a part of he functionality while for more complex operations requiring more computing power the mobile device may make use of a server computer by connecting thereto.

**Claims**

1.   A method for automatically determining a semantic classification for context data obtained by a mobile device, said method comprising:

sampling by said mobile device one or more context data streams over time;
applying a clustering algorithm to identify one or more clusters in the sampled context data;
running a logic engine to automatically determine a concept name from a set of predefined concept names as a semantic classification of said one or more clusters;
assigning said concept name to said one or more clusters or suggesting said assignment to the user.

2.   The method of claim 1, wherein
said mobile device samples a plurality of context data streams, whereas the sampling data are used to populate context state vectors such that a vector component of a context state vector corresponds to one of said plurality of data streams, whereas
said sampling is carried out in regular time intervals, each sampling resulting in a corresponding context state vector populated by the sampled values, and said method further comprising:

executing said clustering algorithm on a set of sampled context state vectors to obtain a cluster, which is spanned up, by context state vectors.

3.   The method of claim 1 or 2, wherein
the clustering algorithm comprises a Markov clustering algorithm.

4.   The method of one of the preceding claims, wherein

a cluster found by the clustering algorithm is named or suggested for naming to the user if the total stay of the user inside this cluster exceeds a certain threshold.

**5.** The method of one of the preceding claims, further comprising:

providing an ontology which comprises a set of possible concept names and which are qualitative terms, which may be used, for naming said cluster, whereas
receiving by said logic the parameters defining a cluster obtained from said clustering algorithm, whereas said logic engine has implemented knowledge about under which conditions a cluster should be assigned which concept name;
processing said parameters defining a cluster by said logic engine and returning a suggestion for a concept name for said cluster by said logic engine.

**6.** The method of claim 5, wherein said processing comprises:

referring to a set of rules to decide based on the parameters defining said clusters which rules are fulfilled and which conclusion therefore has to be drawn to arrive at a concept name as said conclusion.

**7.** The method of one of claims 1 to 6, wherein said processing comprises:

if said cluster has other clusters in its proximity, which according to a distance measure lie within a certain threshold, and if among said other clusters a concept name has been chosen with a certain likelihood lying beyond a threshold, suggesting this concept name as the concept name for the cluster actually to be named.

**8.** The method of one of claims 1 to 7, further comprising:

providing a context model implemented by formalizing general world knowledge and actual qualitative context information coming from the cluster context streams with respect to one formal language;
providing an inference engine which is able to compute all consequences of a given set of axioms based on said information received.

**9.** The method of claim 8, further comprising:

applying situational reasoning by combining one or more context elements and/or one or more conceptualized clusters which have been assigned a concept name by a logical expression to enable said logic engine to automatically classify a user's situation as belonging to a type represented by certain concept name based on the available context information.

**10.** The method of one of claims 8 or 9, further comprising:

performing a consistency check if a newly assigned name is added to the concept space by applying automatic classification is applied to check whether the newly assigned name is making sense with respect to the knowledge which is already coded in the ontology.

**11.** The method of one of the preceding claims, wherein
said mobile device receives a plurality of different context data streams, and
carrying out clustering for said different context data streams independently to obtain independent clusters for each context data stream.

**12.** The method of one of the preceding claims, further comprising:

tracking the qualitative context of a user of a mobile device by storing the qualitative context as given by the one or more concept names assigned to clusters in a qualitative context history storage.

**13.** The method of claim 12, further comprising:

providing an interface for querying or analyzing said qualitative context history, and
generating of new documents or information sets based on the history of qualitatively tracked user context.

**14.** The method of one of the preceding claims, further comprising:

monitoring the context situation of the user by monitoring the concept names, which are indicative of the user's context at a certain time;
if the context situation of a user as indicated by one or more concept names fulfils a predetermined condition identifying a particular qualitative context, triggering an action to be performed by the mobile device of the user.

**15.** The method of claim 14, wherein said action comprises one or more of the following;
activating a specific mode or function of the mobile device;
sending a notification or an alert;
ad-hoc grouping of users in similar qualitative context
adding automatic annotations to user data based on qualitative context;
automatic generation of new documents based on the history of qualitatively tracked user context

**16.** An apparatus for automatically determining a semantic classification to context data obtained by a mobile device, said apparatus comprising:

means for sampling by said mobile device one or more context data streams over time;
applying a clustering algorithm to identify one or more clusters in the sampled context data;
a logic engine for automatically determining a concept name from a set of predefined concept names as a semantic classification of said one or more clusters;
means for assigning said concept name to said one or more clusters or suggesting said assignment to the user.

**17.** The apparatus of claim 16, further comprising:

means for carrying out a method according to one of claims 1 to 15.

**18.** A computer program comprising program code which when being executed on a computer causes said computer to carry out a method according to one of claims 1 to 15.

EP 1 939 797 A1

Fig. 1

EP 1 939 797 A1

500

Context data sampling over
time period

510

Apply clustering algorithm to find
clusters

520

Determine a concept name

530

Assign or suggest concept name

## Fig. 2

Fig. 3

Distance
metric

Populate
context state
vectors

Compute durations,
distances, transition
probabilities per
(pair of) vectors

Pruning of
transition and
distance matrices

1st order
Markov clustering

Context
measurements
over the last
*n* days

Existing
clusters
of this user

Extend existing
clusters and provide
recommendations
for merge (if any)

Present clusters
to the user to allow
naming, typication,
merge, and delete.

Legend

Process

Data

Existing
clusters
of other users
& social
relationships

Recommend names
and types, assist
user to make choice
easy

Ready

Fig. 4

Fig. 5

Situation
$\cap$ ($\exists$ location location:Office)
$\cap$ ($\exists$ time time:Office_hour)

Business $\cap$ Meeting $\cap$
($\exists$ company agent:Colleague)

**Business**

**Business_meeting** ← **Important_meeting**

**Situation** ← **Meeting**

Business_Meeting $\cap$
($\exists$ company agent:Supervisor)

location = 1
$\cap$ time = 1

Situation $\cap$
company $\geq$ 1

**Private_meeting**

**Private**

Private $\cap$ Meeting $\cap$
($\exists$ company agent:Family)

Situation $\cap$($\exists$ location:Home
$\cup$ location:Entertainment $\cup$ location:Others)

# Fig. 6

EP 1 939 797 A1

Fig. 7

**European Patent Office**

# EUROPEAN SEARCH REPORT

Application Number

EP 06 12 7188

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KRISTOF VAN LAERHOVEN: "On-line Adaptive Context Awareness startend vanuit low-level sensoren" 28 May 1999 (1999-05-28), VRIJE UNIVERSITEIT BRUSSEL , BELGIUM. , XP002433348 | 1-3,7, 11,16-18 | INV. G06N5/02 G06N1/00 |
| Y | PhD Thesis in Computer Science, in English. * paragraphs [2.2.] - [02.5] * * paragraph [3.1.] * * paragraphs [5.1.], [5.5.] * * figure 22 * ----- | 4-6, 8-10, 12-15 | |
| Y | KARI LAASONEN ET AL: "Adaptive On-Device Location Recognition" LNCS PROC. PERVASIVE 2004, no. 3001, 23 April 2004 (2004-04-23), pages 287-304, XP019004327 Berlin, Germany * paragraph [3.1.] * ----- | 4 | |
| Y | RAMASWAMY HARIHARAN, KENTARO TOYAMA: "Project Lachesis: Parsing and Modeling Location Histories" LNCS, vol. 3234/2004, 31 December 2004 (2004-12-31), XP002433345 * paragraph [001.] * ----- -/-- | 12,13 | **TECHNICAL FIELDS SEARCHED (IPC)** G06N |

The present search report has been drawn up for all claims

| Place of search | Date of completion of the search | Examiner |
|---|---|---|
| The Hague | 11 May 2007 | Valencia, Erika |

**European Patent Office**

**EUROPEAN SEARCH REPORT**

Application Number

EP 06 12 7188

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CLARKSON B ET AL: "Recognizing user context via wearable sensors" WEARABLE COMPUTERS, THE FOURTH INTERNATIONAL SYMPOSIUM ON ATLANTA, GA, USA 16-17 OCT. 2000, LOS ALAMITOS, CA, USA,IEEE COMPUT. SOC, US, 16 October 2000 (2000-10-16), pages 69-75, XP010525995 ISBN: 0-7695-0795-6 * the whole document * ----- | 3 | |
| Y | TAO GU ET AL: "A middleware for building context-aware mobile services" 17 May 2004 (2004-05-17), VEHICULAR TECHNOLOGY CONFERENCE, 2004. VTC 2004-SPRING. 2004 IEEE 59TH MILAN, ITALY 17-19 MAY 2004, PISCATAWAY, NJ, USA,IEEE, US, PAGE(S) 2656-2660 , XP010766730 ISBN: 0-7803-8255-2 * the whole document * ----- | 5,6, 8-10,14, 15 | |

TECHNICAL FIELDS SEARCHED (IPC)

The present search report has been drawn up for all claims

| Place of search | Date of completion of the search | Examiner |
|---|---|---|
| The Hague | 11 May 2007 | Valencia, Erika |

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **FLANAGAN, J A.** Unsupervised clustering of context data and learning user requirements for a mobile device. *Proceedings of the 5th Conference on Modeling and Using Context,* 2005, 155-168
- **V. HAARSLEV ; R. MÖLLER.** Racer: A core inference engine for the Semantic Web Ontology Language (OWL). *Proc. of the 2nd Int. Workshop on Evaluation of Ontology-based Tools,* 2003, 27-36

- **E. SIRIN ; B. PARSIA.** Pellet: An OWL DL reasoner. *Proc. of the Int. Workshop on Description Logics,* 2004, 212-213
- FaCT++ description logic reasoner: System description. In Proc. of the Int. Joint Conf. on Automated Reasoning (IJCAR 2006. **D. TSARKOV ; I. HORROCKS.** Lecture Notes in Artificial Intelligence. Springer, 2006, vol. 4130, 292-297